Europäisches Patentamt

European Patent Office

Office européen des brevets

(11) Veröffentlichungsnummer: **0 219 810**
B1

(12) **EUROPÄISCHE PATENTSCHRIFT**

(45) Veröffentlichungstag der Patentschrift:
12.07.89

(51) Int. Cl.⁴: **C01B 35/12**

(21) Anmeldenummer: 86114296.6

(22) Anmeldetag: 16.10.86

(54) Kristalline Borosilikatzeolithe vom Sodalithtyp und Verfahren zu ihrer Herstellung.

(30) Priorität: 25.10.85 DE 3537998

(43) Veröffentlichungstag der Anmeldung:
29.04.87 Patentblatt 87/18

(45) Bekanntmachung des Hinweises auf die Patenterteilung:
12.07.89 Patentblatt 89/28

(84) Benannte Vertragsstaaten:
BE DE FR GB NL

(56) Entgegenhaltungen:
EP-A- 0 077 946

(73) Patentinhaber: BASF Aktiengesellschaft,
Carl-Bosch-Strasse 38, D-6700 Ludwigshafen(DE)

(72) Erfinder: Hoelderich, Wolfgang, Dr., Mannheimer
Strasse 18 c, D-6710 Frankenthal(DE)
Erfinder: Lermer, Helmut, Dr., D 3,4,
D-6800 Mannheim 1(DE)

**Beschreibung**

Die Erfindung betrifft einen neuen Borosilikat-Zeolith - BSD - mit Sodalith-Struktur und ein Verfahren zu seiner Herstellung durch hydrothermale Kristallisation.

Allgemein besitzen Zeolithe eine hochgeordnete Struktur mit einem starren dreidimensionalen Netzwerk von $SiO_4$- und $MeO_4$-Tetraedern, wobei Me z.B. Al, Fe, Ga und B sein kann. Diese Tetraeder sind durch gemeinsame Sauerstoffatome verbunden. Das Verhältnis der Si- und Me-Atome zu Sauerstoff beträgt 1:2.

Die Elektrovalenz der dreiwertige Metallatome enthaltenden Tetraeder ist durch Einschluß von Kationen in den Kristall, z.B. eines Alkali- oder Wasserstoffions, ausgeglichen. Ein Kationenaustausch ist möglich. Die Räume zwischen den Tetraedern sind vor der Dehydration durch Trocknen oder Calcinieren von Wassermolekeln besetzt.

Aluminium-Sodalithe treten als Mineralien auf. Synthetisch sind sie durch eine hydrothermale Reaktion zugänglich (D.W. Breck, Zeolite Molecular Sieves, Wiley, New York (1974), S. 269 ff; Ch. Baerlocher, W.M. Meier, Helv. Chim. Acta 52 (1969), 1853).

Al-haltige zeolithische Materialien, sowohl natürlicher als auch synthetischer Herkunft, haben sich als katalytisch wirksam erwiesen für verschiedene Arten von Kohlenwasserstoffumwandlungen, z.B. zum Cracken von Kohlenwasserstoffen. Sie finden auch als Ionenaustauscher und Molekularsiebe technische Verwendung.

Bor-Zeolithe sind bisher in der Natur nicht gefunden worden. Bor-Zeolithe vom Pentasiltyp konnten inzwischen auf synthetischem Wege erhalten werden (DE-OS 27 46 790 und EP 77 946-A3). Beim Verfahren gemäß EP 77 946-A3 werden Ether in der Synthesemischung eingesetzt.

Die Erfindung betrifft einen neuen kristallinen Borosilikatzeolith vom Sodalithtyp.

Insbesondere betrifft die Erfindung neue kristalline Borosilikatzeolithe - BSD gemäß folgendem Röntgenbeugungsdiagramm mit den Beugungslinien:

| Interplanarer Abstand d (Å) | Relative Intensität $I/I_0 \times 100$ |
|---|---|
| 6,21 ± 0,1 | 100 |
| 4,38 ± 0,1 | 15 |
| 3,58 ± 0,07 | 67 |
| 3,10 ± 0,07 | 12 |
| 2,77 ± 0,07 | 13 |
| 2,53 ± 0,07 | 10 |
| 2,35 ± 0,07 | 3 |

einer im kubischen System bestimmten Gitterkonstante von (8,77 ± 0,04) Å und einer durch folgende Formel beschriebenen Zusammensetzung:

$$M_{2/n} O \cdot B_2O_3 \cdot xSiO_2 \cdot yH_2O,$$

worin M zumindest ein Kation mit einer Wertigkeit n bedeutet, x zwischen 2 und 15 liegt und y zwischen 0 und 80.

Es wurde weiterhin gefunden, daß man neuartige kristalline Borosilikatzeolithe - BSD vom Sodalith-Typ durch hydrothermale Kristallisation von Siliciumdioxid und Borsäure in Gegenwart von Alkalisalzen erhält, wenn man die Kristallisation bei Temperaturen von 80 bis 140°C in einer Trioxan-Wasser-Mischung ausführt.

Eine bevorzugte Ausführungsform zur Herstellung dieser Borosilikatzeolithe - BSD - besteht darin, daß man eine Reaktionsmischung aus $SiO_2$, z.B. eine käufliche pyrogene Kieselsäure, $H_3BO_3$ und NaOH in einer Trioxan/Wasser-Mischung von 50:50 Gew.% 5 bis 7 Tage bei 110 bis 130°C unter autogenem Druck in einem Rührautoklaven umsetzt. Das zunächst erhaltene Reaktionsprodukt kann vor der Calcinierung noch Trioxan enthalten anstelle der in den intrakristallinen Poren enthaltenen $H_2O$-Molekeln. Alle Reste organischer Verbindungen werden durch Trocknen und Calcinieren entfernt, so daß nur noch die freien Alkaliionen im Zeolith enthalten sind.

Das Molverhältnis von $SiO_2$ zu $B_2O_3$ in der Reaktionsmischung wird zweckmäßig zwischen 3 und 50, vorzugsweise zwischen 5 bis 20 eingestellt.

Der Anteil an Alkalisalzen in der Reaktionsmischung liegt bei 2 bis 4 Mol pro Mol $B_2O_3$, bevorzugt bei etwa 3 Mol pro Mol $B_2O_3$.

Es ist zweckmäßig, Impfkristalle zur Reaktionsführung und -beschleunigung zuzusetzen.

Als organische Komponente wird Trioxan verwendet. Man erhält gut geformte kubische Kristalle des Bor-Sodaliths BSD von der Größe von etwa 0,2 bis 4 μm (siehe Abb.).

Die molare Zusammensetzung der Reaktionsmischung wird wie folgt eingestellt:

| $SiO_2/B_2O_3$ | = 2–50, vorzugsweise 2–15 |
| $M_2O/B_2O_3$ | > = 1, vorzugsweise 2,5–3,0 |
| $C_3H_6O_3/B_2O_3$ | = 18–300 |

wobei M = Alkali, insbesondere Na, bedeutet. Die Konzentration des Trioxans in $H_2O$ kann zwischen 10 und 100 Gew.% liegen, bevorzugt 50 Gew.%.

Die hydrothermale Kristallisation wird bei Reaktionstemperaturen im Bereich von 80 bis 140°C ausgeführt, vorzugsweise arbeitet man zwischen 110 bis 130°C und unter dem Eigendruck in einem Rührautoklaven aus Edelstahl. Die Reaktionsdauer beträgt im allgemeinen 3 bis 7 Tage.

Nach der Reaktion wird das Reaktionsprodukt zweckmäßigerweise abfiltriert, mit Wasser gut ausgewaschen und bei 110°C/16 h getrocknet. Anschließend kann man das Produkt bei 500°C/20 h calcinieren, um das noch eingeschlossene Trioxan herauszubrennen und den Zeolith zu dehydratisieren. Die Überführung der Alkali-Form des Zeolithen in die H-Form kann nach bekannten Austauschverfahren z.B. mit Ammoniumsalzen erfolgen. Die abgetrennte Mutterlauge kann man für weitere Synthesen verwenden.

Die allgemeine Formel für die erfindungsgemäß hergestellten kristallinen Borosilikatzeolithe - BSD vom Sodalithtyp lautet:

$M_{2/n}O \cdot B_2O_3 \cdot x\,SiO_2 \cdot y\,H_2O$,

worin M zumindest ein Kation mit einer Wertigkeit n bedeutet, $x \geq 5$ und $x \leq 15$ beträgt und y zwischen 0 und 80 liegt.

Die erfindungsgemäß in Trioxan oder Trioxan/Wasser-Mischungen hergestellten Borosilikatzeolithe - BSD zeigen folgende Röntgenbeugungslinien:

### Tabelle 1

| Interplanarer Abstand d (Å) | Relative Intensität $I/I_0 \times 100$ |
|---|---|
| 6,21 ± 0,1 | 100 |
| 4,38 ± 0,1 | 15 |
| 3,58 ± 0,07 | 67 |
| 3,10 ± 0,07 | 12 |
| 2,77 ± 0,07 | 13 |
| 2,53 ± 0,07 | 10 |
| 2,35 ± 0,07 | 3 |
| 2,18 ± 0,07 | 3 |
| 2,06 ± 0,07 | 3 |

Das Röntgenbeugungsdiagramm wird mit einem automatischen Pulverdiffraktometer APD-10 hergestellt. Es wird Kupferstrahlung zusammen mit einem Graphitmonochromator verwendet.

Das für die in Trioxan hergestellten Borosilikatzeolithe - BSD typische Röntgenbeugungsmuster weist diese als Mitglieder der Sodalith-Familie aus.

In den erfindungsgemäßen Borosilikatzeolithen - BSD ist das Bor in die tetraedrischen Gitterplätze des Kristallgerüstes eingebaut. Der Einbau von Bor in das Kristallgerüst kommt in der Verschiebung der Röntgenbeugungslinien nach kleineren d-Werten im Vergleich zu entsprechenden Aluminosilikatzeolithen zum Ausdruck (Tabelle 2); die Bindungslänge einer B-O-Bindung ist erheblich kürzer als der Al-O-Abstand. Der Einbau des Bors in das Kristallgerüst bewirkt daher eine Kontraktion der Elementarzelle, d.h. eine Verschiebung der d-Abstände nach kleineren Werten im Vergleich zu entsprechenden Aluminosilikatzeolithen.

Ein Vergleich der Netzebenabstände der hier beschriebenen Borzeolithe-BSD mit denen des Hydroxisodaliths zeigt, daß die d-Werte (Å) beim Bor-Zeolith kleiner sind als beim Aluminosilikat HS (Tabelle 2).

Aluminium-Sodalith besitzt eine Gitterkonstante von 8,86 Å (D.W. Breck, Zeolite Molecular Sieves, Wiley, New York (1974), S. 360).

Für den erfindungsgemäßen Borosilikat-Zeolith vom Typ BSD wurde die Gitterkonstante im kubischen System zu (8,77 ± 0,04) Å bestimmt.

Tabelle 2

Hydroxisodalith (D.W. Breck, Zeolite Molecular
Sieves, Wiley, New York, 1974, S. 360)

| Interplanarer Abstand<br>d (Å) | Relative Intensität<br>$I/I_0 \times 100$ |
|---|---|
| 6,28 | 80 |
| 4,44 | 30 |
| 3,97 | 5 |
| 3,63 | 100 |
| 3,13 | 5 |
| 2,81 | 60 |
| 2,56 | 80 |
| 2,37 | 30 |
| 2,09 | 80 |

Ein Vergleich der Intensität der Röntgenbeugungslinien zeigt deutliche Unterschiede auf.

Die Unterschiede sowohl in den d-Werten und der Gitterkonstanten als auch in den Intensitäten im Diffraktogramm weisen die BSD-Borosilikate als neuartige Zeolithe aus.

Nach dem Calcinieren können die Borosilikat-Zeolithe - BSD als Adsorptionsmittel und zur Reinigung von Gasen verwendet werden.

Beispiel

In 1000 g Trioxan/Wasser-Gemisch (50 Gew.% Trioxan) werden bei etwa 50°C 80 g pyrogene Kieselsäure eingerührt. 15,2 g Borsäure werden in 200 g wäßriger Trioxanlösung (50 Gew.% Trioxan) gelöst. Diese Lösung wird in die vorgelegte Suspension eingerührt. Anschließend werden noch 14,7 g Natriumhydroxid, gelöst in 30 g Wasser, zugegeben. Die homogen gerührte Mischung wird im Rührautoklav 7 Tage auf 130°C erhitzt. Nach Abkühlen des Reaktionsgemisches wird das kristalline Produkt abfiltriert, mit 10 l Wasser gewaschen, 16 h bei 110°C getrocknet und 10 h bei 500°C calciniert.

Das Diffraktogramm der erhaltenen Probe entspricht den in Tabelle 1 angegebenen Werten.

Das calcinierte Produkt besitzt folgende Zusammensetzung:

| $SiO_2$: | 82,0 Gew..% |
|---|---|
| $Al_2O_3$: | <0,005 Gew.-% |
| $B_2O_3$: | 9,08 Gew.-% |
| Na: | 5,2 Gew.-% |

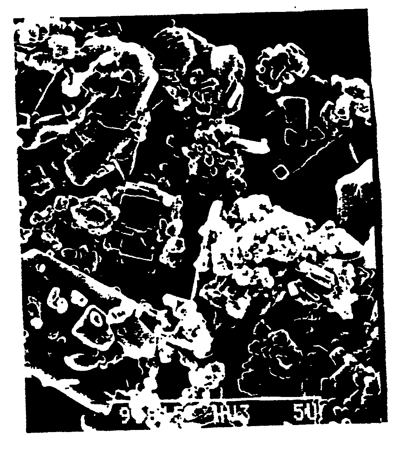

Patentansprüche

1. Kristalline Borosilikatzeolithe - BSD vom Sodalith-Typ gemäß folgendem Röntgenbeugungsdiagramm mit den Beugungslinien:

| Interplanarer Abstand<br>d (Å) | Relative Intensität<br>$I/I_0 \times 100$ |
|---|---|
| 6,21 ± 0,1 | 100 |
| 4,38 ± 0,1 | 15 |
| 3,58 ± 0,07 | 67 |
| 3,10 ± 0,07 | 12 |
| 2,77 ± 0,07 | 13 |
| 2,53 ± 0,07 | 10 |
| 2,35 ± 0,07 | 3 |

einer im kubischen System bestimmten Gitterkonstante von (8,77 Å 0,04) Å und einer durch folgende Formel beschriebenen Zusammensetzung:

$M_{2/n} O \cdot B_2O_3 \cdot xSiO_2 \cdot yH_2O$,

worin M zumindest ein Kation mit einer Wertigkeit n bedeutet, x zwischen 2 und 15 liegt und y zwischen 0 und 80.

2. Verfahren zur Herstellung von kristallinen Borosilikatzeolithen - BSD vom Sodalith-Typ durch hydrothermale Kristallisation von Siliciumdioxid und Borsäure in Gegenwart von Alkalisalzen, dadurch gekennzeichnet, daß man die Kristallisation bei Temperaturen von 80 bis 140°C in einer Trioxan-Wasser-Mischung ausführt.

3. Verfahren nach Anspruch 2, dadurch gekennzeichnet, daß die Mischung Alkalisalze in Mengen von 2 bis 4 Mol pro Mol $B_2O_3$ enthält.

4. Verfahren nach Anspruch 2 und 3, dadurch gekennzeichnet, daß man in der Reaktionsmischung ein molares Verhältnis von $SiO_2/B_2O_3$ von 3 bis 50, bevorzugt von 5 bis 20 einstellt.

5. Verwendung der kristallinen Borosilikatzeolithe - BSD nach Anspruch 2 bis 4 als Adsorptionsmittel und zur Gasreinigung.

## Claims

1. A crystalline borosilicate zeolite, BSD, of the sodalite type having the following X-ray diffraction pattern with the diffraction lines:

| Interplanar spacing d (Å) | Relative Intensity $I/I_0 \times 100$ |
| --- | --- |
| $6.21 \pm 0,1$ | 100 |
| $4.38 \pm 0,1$ | 15 |
| $3.58 \pm 0,07$ | 67 |
| $3.10 \pm 0,07$ | 12 |
| $2.77 \pm 0,07$ | 13 |
| $2.53 \pm 0,07$ | 10 |
| $2.35 \pm 0,07$ | 3 |

a lattice constant of $(8.77 \pm 0.04)$ Å determined in the cubic system, and a composition described by the following formula:

$M_{2/n} O \cdot B_2O_3 \cdot xSiO_2 \cdot yH_2O$,

where M is one or more cations having a valence of n, x is from 2 to 15 and y is from 0 to 80.

2. A process for the preparation of a crystalline borosilicate zeolite, BSD, of the sodalite type by hydrothermal crystallization of silica and boric acid in the presence of an alkali metal salt, wherein the crystallization is carried out at from 80 to 140°C in a trioxane/water mixture.

3. A process as claimed in claim 2, wherein the mixture contains an alkali metal salt in an amount of from 2 to 4 moles per mole of $B_2O_3$.

4. A process as claimed in claims 2 and 3, wherein the molar ratio of $SiO_2/B_2O_3$ in the reaction mixture is brought to 3–50, preferably 5–20.

5. Use of a crystalline borosilicate zeolite, BSD, as claimed in any of claims 2 to 4, as an adsorbent and for gas purification.

## Revendications

1. Zéolites de borosilicate cristallines – BSD – du type sodalite selon le diagramme de diffraction des rayons X suivant avec les lignes de diffraction:

| Distance entre plans d (Å) | Intensité relative $I/I_0 \times 100$ |
| --- | --- |
| $6,21 \pm 0,1$ | 100 |
| $4,38 \pm 0,1$ | 15 |
| $3,58 \pm 0,07$ | 67 |
| $3,10 \pm 0,07$ | 12 |
| $2,77 \pm 0,07$ | 13 |
| $2,53 \pm 0,07$ | 10 |
| $2,35 \pm 0,07$ | 3 |

ayant une constante de réseau, déterminée dans le système cubique, de (8,77 ± 0,04) Å et une composition décrite par la formule suivante

$M_{2/n} O \cdot B_2O_3 \cdot xSiO_2 \cdot yH_2O$,

dans laquelle M représente au moins un cation de valence n, x se situe entre 2 et 15 et y entre 0 et 80.

2. Procédé de préparation de zéolites de borosilicate cristallines – BSD – du type sodalite par cristallisation hydrothermale de bioxyde de silicium et d'acide borique en présence de sels alcalins, caractérisé en ce qu'on conduit la cristallisation à une température de 80 à 140°C dans un mélange trioxanne/eau.

3. Procédé selon la revendication 2, caractérisé en ce que le mélange contient des sels alcalins dans des proportions de 2 à 4 mol par mol de $B_2O_2$.

4. Procédé selon la revendication 2 ou 3, caractérisé en ce qu'on règle, dans le mélange réactionnel, un rapport molaire $SiO_2/B_2O_2$ de 3 à 50, de préférence de 5 à 20.

5. Utilisation des zéolites de borosilicate cristallines – BSD – selon l'une quelconque des revendications 2 à 4 comme agent d'adsorption et pour la purification de gaz.